# FASCICULE DE BREVET EUROPEEN

(11) **EP 1 041 468 B1**
(45) Date de publication et mention de la délivrance du brevet: **09.01.2002**
(21) Numéro de dépôt: 00400706.8
(22) Date de dépôt: 14.03.2000
(51) Int. Cl.: G04G 1/00, G04G 5/00

(54) **Dispositif et procédé de sauvegarde de l'heure dans un téléphone mobile**
Verfahren und Vorrichtung um Zeit in einem tragbaren Telefonzu bewahren
Means and method to store the time in a mobile telephone

(30) Priorité: 01.04.1999 FR 9904098
(43) Date de publication de la demande: 04.10.2000
(73) Titulaire: SAGEM S.A., 75015 Paris (FR)
(72) Inventeur: Romao, M. Fernando, 78360 Montesson (FR)
(74) Mandataire: Schmit, Christian Norbert Marie

(56) Documents cités:
- EP-A- 0 619 685
- WO-A-96/21177
- DE-A- 19 500 679

## Description

La présente invention a pour objet un dispositif de sauvegarde de l'heure dans un téléphone mobile. Elle a aussi pour objet un procédé de sauvegarde de l'heure dans un téléphone mobile. Elle trouve son application dans le domaine de la téléphonie mobile, notamment celle selon la norme GSM. Le but de l'invention est d'assurer, lors d'une coupure d'alimentation d'une horloge, une sauvegarde de l'heure et ce pour un faible coût. De plus, un autre but de l'invention est de diminuer un encombrement d'un téléphone mobile.

Dans l'état de la technique, un téléphone mobile muni d'une horloge comporte un condensateur connecté à une entrée d'alimentation de l'horloge. Ainsi, lors d'une coupure de l'alimentation de l'horloge, on maintient cette dernière active grâce à ce condensateur. Une durée de décharge de ce condensateur détermine une durée de sauvegarde de l'horloge du téléphone mobile. Une durée de sauvegarde dépend directement d'une valeur de capacité du condensateur (voir aussi DE-A-195 00 679). De plus, un courant consommé par l'horloge impose, pour une durée de sauvegarde donnée, une valeur de capacité du condensateur. Généralement, cette valeur de capacité prend une valeur allant de 0,1 millifarad à 1 millifarad suivant la durée de sauvegarde requise. De telles valeurs de capacité se traduisent par des condensateurs dont un volume devient rapidement important.

Une telle réalisation présente des problèmes. En effet, les condensateurs employés présentent un encombrement difficilement acceptable par rapport à l'utilisation qui en est faite. Cet encombrement est directement lié à un courant consommé par l'horloge du téléphone mobile et par une durée maximale de sauvegarde que l'on veut obtenir, en général quelques minutes. De plus, avec de telles valeurs de capacité le condensateur employé est un condensateur chimique. Un condensateur chimique est polarisé. Lors d'un montage de ce dernier, généralement sur un circuit imprimé, il faut veiller à ne pas inverser une polarisation de ce dernier. Ceci implique des contrôles supplémentaires lors de la réalisation du téléphone mobile.

Un autre problème consiste en la nécessité de maintenir actifs des composants électroniques tels que des mémoires afin de sauvegarder pendant une durée déterminée une information de temps absolu relative à l'horloge. Cette durée de sauvegarde excède rarement 15 minutes et est plus généralement inférieure à 10 minutes.

Un problème apparaît toutefois lorsqu'un utilisateur souhaite enlever un dispositif d'alimentation d'un téléphone mobile pour le remplacer, par exemple s'il est hors d'usage. Ce dispositif d'alimentation est généralement une batterie. Il se peut qu'une batterie de remplacement ne soit pas encore disponible. Elle est dans une phase de charge par exemple. Dans ce cas, une durée de charge de la batterie de remplacement peut être supérieure à une durée maximale de sauvegarde de l'heure dans le téléphone mobile. Ainsi, lorsqu'une fin de décharge du condensateur est atteinte l'information d'horloge absolue est perdue. En conséquence, il incombe à l'utilisateur de procéder à un réglage manuel de l'horloge afin de mettre à jour une information d'horloge absolue. Les téléphones mobiles de l'état de la technique imposent donc de disposer d'une batterie de rechange, ou tout du moins de rétablir l'alimentation, dans un délai d'au plus 15 minutes.

La présente invention se propose de remédier à ces problèmes en proposant un téléphone mobile pour lequel une durée de sauvegarde est augmentée jusqu'à une valeur de plus de 3 heures et 28 minutes. Dans l'invention on mesure une durée pendant laquelle le téléphone mobile est resté sans alimentation à l'aide d'informations en provenance d'un réseau de téléphonie mobile avec lequel le téléphone mobile est relié. Une fois cette durée déterminée, elle est ajoutée au contenu d'une mémoire non volatile dans laquelle on a sauvegardé une information d'horloge avant une coupure de l'alimentation du téléphone mobile.

La présente invention concerne donc un procédé de sauvegarde de l'heure dans un téléphone mobile comportant un dispositif d'horloge caractérisé en ce que lors d'une coupure d'alimentation du téléphone mobile:
- on mémorise dans une mémoire non volatile une information d'horloge du téléphone mobile,
- on mesure le numéro d'une première trame d'une hypertrame produite par un réseau de téléphonie mobile avec lequel le téléphone mobile est relié, cette première trame étant reçue avant la coupure d'alimentation, de préférence la dernière reçue,
et en ce que lors d'un rétablissement de l'alimentation :
- on mesure le numéro d'une deuxième trame, de l'hypertrame, postérieure à la première trame, cette deuxième trame étant reçue après le rétablissement de l'alimentation, de préférence la première reçue,
- on calcule une différence entre le numéro de la deuxième trame et le numéro de la première trame,
- on transforme cette différence en une information temporelle,
- on met à jour l'information d'horloge en ajoutant une valeur de l'information temporelle au contenu du registre de sauvegarde.

Elle concerne aussi un téléphone mobile comportant une horloge caractérisé en ce qu'il comporte une mémoire de sauvegarde non volatile, notamment de type EEPROM par exemple, d'un numéro d'une trame d'une hypertrame provenant d'un réseau de téléphonie mobile avec lequel le téléphone mobile est relié.

La présente invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : un téléphone mobile selon l'invention ;
- Figure 2 : une représentation, sous une forme d'un algorithme, d'un fonctionnement du procédé de l'invention.

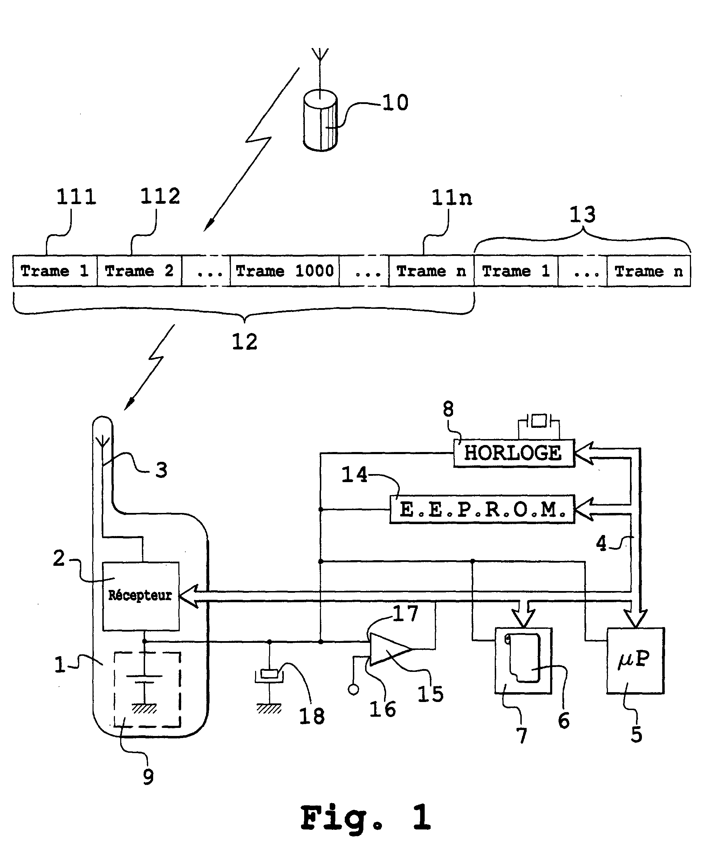

La figure 1 montre un téléphone mobile 1 comportant un dispositif 2 de réception. Le dispositif 2 est relié d'une part à une antenne 3 et d'autre part, par l'intermédiaire d'un bus 4 de commandes, de données et d'adresses, à un microprocesseur 5 commandé par un programme 6 contenu dans une mémoire de programme 7. Le dispositif 2 a pour fonction de transformer des signaux radioélectriques reçus sur l'antenne 3 en signaux utilisables par le microprocesseur 5. Le téléphone mobile 1 comporte en outre une horloge 8 alimentée par un dispositif 9 d'alimentation. De la même manière, le dispositif 2, la mémoire 7 et le microprocesseur 5 sont alimentés par le dispositif 9.

Le téléphone mobile 1 est relié par une liaison radioélectrique à une station de base 10 d'un réseau de téléphonie mobile.

Dans un exemple préféré, le téléphone mobile 1 et la station de base 10 échangent des informations produites selon la norme GSM. Dans un exemple, un protocole d'accès à un support de communication, c'est à dire la liaison radioélectrique, entre le téléphone mobile 1 et la station de base 10 est un protocole TDMA (Time Division Multiple Access en anglais, AMRT Accès Multiple à Répartition dans le Temps en français). Le protocole TDMA est un protocole où une information émise est de durée finie pour être contenue dans une fenêtre temporelle, réservée à une information. Une autre information est émise en utilisant une fenêtre temporelle ultérieure.

On connaît par le document "Réseaux GSM-DCS" dû à MM Xavier LAGRANGE, Philippe GODLEWSKI, Sami TABBANE, édité en 1997 par les éditions Hermès, Paris, France, page 219 et suivantes, une description générale de la couche physique de la liaison radioélectrique entre un téléphone mobile et une station de base de la norme GSM. Dans ce document, on décrit une organisation des fenêtres en trames, multitrames, supertrames et hypertrames. On regroupe ainsi par exemple huit fenêtres temporelles successives pour former une trame. Pendant une durée d'une fenêtre temporelle, des informations utiles sont transportées. Ces informations utiles sont des informations codées d'un signal acoustique de parole et ou de données, ou des informations de signalisation permettant de contrôler une transmission.

Afin de ne pas utiliser une durée d'une fenêtre temporelle par trame seulement pour des informations de signalisation, on regroupe les trames en des groupes de 26 ou 51 trames pour former une multitrame. Un choix de 26 ou 51 trames dépend du type d'informations de signalisation que l'on veut émettre. On répartit ainsi des informations de signalisation sur la durée d'une multitrame. Cela revient à utiliser moins d'une durée d'une fenêtre temporelle par trame pour une information de signalisation.

On regroupe une série de multitrames pour former une supertrame. La supertrame permet seulement d'obtenir un ensemble de trame dont une longueur, en nombre de trame, soit la même qu'on utilise une multitrame avec 26 trames ou une multitrame avec 51 trames. Ainsi, on forme une supertrame en regroupant 26 multitrames de 51 trames ou 51 multitrames de 26 trames. Enfin, on regroupe une succession de supertrames pour former une hypertrame.

Dans une hypertrame, chaque trame émise par la station de base 10 est associée à un numéro de trame. Une première trame 111 émise par la station de base 10 porte le numéro 1. Une deuxième trame 112 émise porte le numéro 2 et ainsi de suite jusqu'à une trame 11n portant le numéro n. On connaît la norme GSM pour laquelle n est égal à 2 715 648. On regroupe cette succession de n trames 111 à 11 n pour former une hypertrame 12. On regroupe les n trames suivantes pour former une autre hypertrame 13 successive. On numérote ainsi des trames avec une périodicité n.

Dans l'invention, le téléphone mobile 1 comporte une mémoire non volatile 14. Dans un exemple préféré cette mémoire 14 est de type EEPROM (Electrically Erasable Programmable Read Only Memory, Mémoire à lecture seule électriquement effaçable et programmable). On pourrait utiliser tout autre type de mémoire non-volatile pour la mémoire 14, par exemple une mémoire sauvegardée par pile. Il suffit que la mémoire non-volatile utilisée permette de sauvegarder une valeur lorsque l'alimentation, fournie par le dispositif 9, est coupée et ce pendant une durée dans un exemple préféré supérieure à 3 heures et 28 minutes.

Le téléphone mobile 1 comporte en outre un dispositif 15 de détection d'une coupure d'alimentation avec deux entrées 16 et 17. Il comporte encore un condensateur 18 relié en parallèle sur le dispositif 9 d'alimentation. Dans un exemple préféré, le dispositif 15 est un amplificateur. Sur l'entrée 16 on applique une tension de seuil dont une valeur est égale, par exemple, à une valeur de 0,5 volts en dessous de la valeur de tension fournie normalement par le dispositif 9. L'entrée 17 est reliée aux bornes du condensateur 18. Ainsi lorsque l'on enlève le dispositif 9, la tension aux bornes du condensateur 18 décroît suite à la décharge du condensateur 18. Le dispositif 15 détecte une chute de tension due à cette décroissance de la tension d'alimentation. Le microprocesseur 5 lit une information de détection produite par le dispositif 15 sur le bus 4. Le microprocesseur 5, sur commande du programme 6, place dans la mémoire 14 une information d'horloge de l'horloge 8. Une valeur de la capacité du condensateur 18 est suffisante pour permettre de maintenir actifs les éléments du téléphone mobile 1 lors d'une durée de cette sauvegarde.

Pendant un fonctionnement normal, c'est à dire lorsque le dispositif 9 est présent, le téléphone mobile 1 mesure, par l'intermédiaire du dispositif 2 et de l'antenne 3, des numéros de trames des hypertrames produites par la station de base 10. Ces numéros de trame permettent au téléphone mobile 1 de se repérer dans la structure d'une hypertrame et de savoir, entre autre, quel type d'informations le téléphone mobile 1 a reçu. Régulièrement, le microprocesseur 5 mémorise dans la mémoire 14 le numéro d'une trame de l'hypertrame 12. De préférence ce numéro dit de première trame est celui de la dernière trame reçue. D'autres périodicités sont cependant possibles. Lors d'une suppression de l'alimentation, cette première trame, par exemple la trame 112 qui porte le numéro 2, est mémorisée dans la mémoire 14.

Lorsque l'alimentation est rétablie, le dispositif 15 détecte ce rétablissement de l'alimentation et envoie une information de détection au microprocesseur 5. Le microprocesseur 5 mesure alors le numéro d'une autre trame dite deuxième trame, par exemple la trame 11n qui porte le numéro n. Cette deuxième trame est de préférence la première reçue après un rétablissement de l'alimentation. Le microprocesseur 5 calcule une différence entre le numéro de la deuxième trame 11n et le numéro de la première trame 112. Le microprocesseur 5, grâce au programme 6, transforme cette différence en une information temporelle. Pour cela, on connaît la durée d'une trame qui est de l'ordre de 4,615 millisecondes. Le microprocesseur 5 réalise donc une multiplication entre une valeur de la différence calculée et la valeur de 4,615 millisecondes pour obtenir une information temporelle relative à la durée pendant laquelle l'alimentation a été interrompue. Le microprocesseur 5 met à jour une information d'horloge de l'horloge 8 en ajoutant une valeur de l'information temporelle ainsi calculée au contenu de l'information d'horloge mémorisée dans la mémoire 14 avant la coupure de l'alimentation.

Cependant, selon une valeur du numéro de la deuxième trame plusieurs cas peuvent se présenter. Si le numéro de la deuxième trame est inférieur au numéro de la première trame cela signifie que la deuxième trame appartient à une autre hypertrame. En faisant l'hypothèse qu'il s'agit de l'hypertrame 13 suivante, il suffit de calculer la différence entre le numéro de la première trame et le numéro n puis d'ajouter cette différence au numéro de la deuxième trame. Si cette hypothèse n'est pas vérifiée, la mise à jour sera fausse. Si également la deuxième trame a un numéro plus grand que le numéro de la première trame mais est situé dans une autre hypertrame alors le calcul de la différence sera erroné. Dans ce cas, l'utilisateur, après s'être aperçu de cette erreur de mise à jour, devra régler manuellement l'information d'horloge de l'horloge 8. Ces cas sont peu probables. En effet, une durée d'une hypertrame est égale à 3 heures et 28 minutes, ce qui laisse un temps important, comparé aux 15 minutes dans l'état de la technique, pour réaliser toutes opérations de maintenance nécessaires pour le dispositif 9 d'alimentation.

Dans une première variante, on reçoit une information relative à un numéro d'hypertrame. Ainsi, un calcul d'une différence entre deux numéros de trame n'est plus un problème. On augmente dans ce cas une durée de sauvegarde puisqu'on peut mesurer des numéros de trames qui appartiennent à des hypertrames différentes.

La production des hypertrames par une station de base n'est pas réalisée de manière synchrone d'une station de base à une autre. Ainsi, lors d'une coupure d'alimentation, le téléphone mobile 1 est relié avec la station de base 10. Cependant, lors d'un rétablissement de l'alimentation le téléphone mobile 1 peut être relié avec une station de base (non représentée) autre que la station de base 10. En conséquence, l'information relative à la différence calculée par le microprocesseur 5 est erronée. Cela implique que, lors du rétablissement de l'alimentation, le téléphone mobile 1 soit encore relié avec la station de base 10.

Dans une deuxième variante, préférée, on ne mesure pas un numéro de trame pour toutes les trames d'une hypertrame. En fait, on préfère mesurer au moins un numéro de trame par minute, deux dans un exemple préféré. En conséquence une précision de la mise à jour de l'information d'horloge dans l'horloge 8 est réalisée avec une précision de l'ordre de 30 secondes. Cette précision est suffisante. Une information d'horloge de l'horloge 8 est généralement produite avec une précision de l'ordre d'une minute. Une fréquence de mesure des numéros de trames d'une hypertrame est donc choisie en fonction de la précision avec laquelle on souhaite réaliser une mise à jour d'une information d'horloge de l'horloge 8. En effet, une augmentation de la fréquence de mesure induit une augmentation d'une fréquence d'une activité du microprocesseur 5.

Dans une troisième variante, on supprime le dispositif 15 de détection. A chaque mémorisation d'un numéro de trame d'une hypertrame, on mémorise aussi une information d'horloge de l'horloge 8 dans la mémoire 14. Ainsi, il devient inutile de détecter une chute de tension pour enclencher une phase de sauvegarde d'une information d'horloge.

Dans une quatrième variante, après un réglage manuel, on mémorise dans la mémoire 14 une information d'horloge de l'horloge 8. On coupe une alimentation de l'horloge 8. On met à jour, comme précédemment régulièrement l'information d'horloge à partir de chaque numéro de trame mesuré. Lorsque le téléphone mobile 1 change de station de base, on active l'alimentation de l'horloge 8 pendant cette phase de transition. On met à jour une information d'horloge de l'horloge 8 à partir des informations mémorisées. Pour activer ou désactiver l'alimentation de l'horloge 8, on place un dispositif interrupteur (non représenté) entre le dispositif 9 et d'alimentation et l'entrée d'alimentation de l'horloge 8. Ce dispositif interrupteur est commandé par le microprocesseur 5 et est fermé pendant cette phase de transition ou ouvert autrement. Dès que le téléphone mobile 1 est connecté avec la nouvelle station de base alors on coupe l'alimentation de l'horloge 8. On met à jour l'information d'horloge à partir des numéros de trame des hypertrames produites par la nouvelle station de base. Ceci permet de réduire encore une consommation électrique de l'horloge 8 et d'augmenter ainsi une autonomie du dispositif 9 d'alimentation.

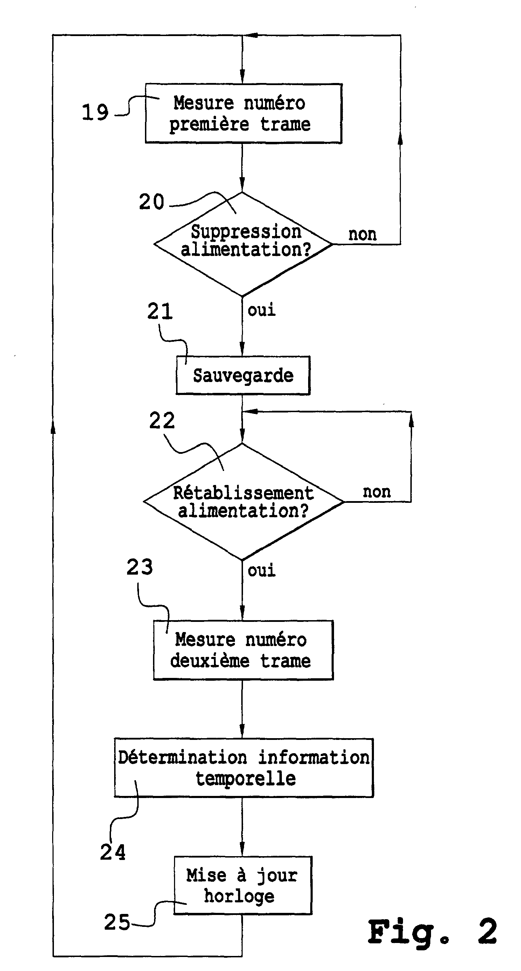

La figure 2 montre une représentation, sous une forme d'un algorithme, d'un fonctionnement du procédé de l'invention. Lors d'une première étape 19 le téléphone mobile 1 mesure un numéro d'une trame d'une hypertrame produite par la station de base 10. Le microprocesseur 5 mémorise dans la mémoire 14 ce numéro de trame. Puis, dans une étape 20 de test, le microprocesseur 5 contrôle qu'une alimentation n'est pas interrompue. Pendant que l'horloge 8 est alimentée, le téléphone mobile 1 mesure régulièrement des numéros de trames d'une hypertrame comme dans l'étape 19. Lorsque l'alimentation est interrompue, on sauvegarde dans une étape 21 une information d'horloge de l'horloge 8 dans la mémoire 14. Le téléphone mobile 1 est dans un état désactivé jusqu'au rétablissement de l'alimentation qui est détectée dans une étape 22. Lorsque dans cette étape 22 le dispositif 15 envoie au microprocesseur 5 une information de détection par l'intermédiaire du bus 4. Le téléphone mobile 1, dans une étape 23, mesure un numéro d'une deuxième trame. Dans une étape 24 le microprocesseur 5 calcule, à partir du numéro de trame mesuré après le rétablissement de l'alimentation et le dernier numéro de trame mesuré avant la coupure de l'alimentation, une différence entre ces deux numéros. Cette différence est transformée en une information temporelle qui permet, dans une étape 25, à partir de l'information d'horloge mémorisée dans la mémoire 14 de mettre à jour l'information d'horloge de l'horloge 8 du téléphone mobile 1.

## Revendications

1. Procédé de sauvegarde de l'heure dans un téléphone mobile (1) comportant une horloge (8) et une mémoire (14) non volatile de mémorisation d'une information d'horloge du téléphone mobile, **caractérisé en ce que** lors d'une liaison avec une station de base (10):
a) - on mémorise une information d'horloge, après un réglage manuel de l'horloge (8), dans la mémoire (14),
b) - on coupe une alimentation de l'horloge (8),
c) - on mesure régulièrement un numéro de trame d'une hypertrame produit par la station de base (10),
d) - on met à jour, pour chaque numéro de trame mesuré, l'information d'horloge mémorisée, une différence entre deux numéros de trames étant transformée en une information temporelle permettant la mise à jour,
et **en ce que** lors d'un changement de station de base :
e) - on active l'alimentation de l'horloge (8),
f) - on mémorise une information d'horloge lorsque le téléphone mobile (1) est relié avec une nouvelle station de base,
g) - on coupe une alimentation de l'horloge (8),
h) - on recommence les étapes e) à g) pour chaque changement de station de base.

2. Téléphone mobile (1) pour la mise en oeuvre du procédé selon la revendication 1 comportant une horloge (8), **caractérisé en ce qu'**il comporte une mémoire (14) de sauvegarde non volatile d'un numéro d'une trame (112) d'une hypertrame (12) provenant d'une station de base (10) d'un réseau de téléphonie mobile, avec laquelle le téléphone mobile (1) est relié.

3. Téléphone (1) selon la revendication 2, **caractérisé en ce que** la mémoire (14) non volatile est de type EEPROM.

4. Téléphone (1) selon la revendication 2 ou la revendication 3, **caractérisé en ce qu'**il comporte un dispositif (15) de détection d'une coupure d'alimentation.

## Patentansprüche

1. Verfahren zum Sichern der Zeitinformation in einem Mobiltelephon (1) mit einem Taktgeber (8) und einem nichtflüchtigen Speicher (14) zur Abspeicherung einer Taktinformation des Mobiltelephons,
**dadurch gekennzeichnet, daß**
bei Verbindung mit einer Basisstation (10):
a) eine Taktinformation in dem Speicher (14) abgespeichert wird nach einer manuellen Einstellung des Taktgebers (8),
b) die Versorgung des Taktgebers (8) unterbrochen wird,
c) regelmäßig eine Rahmennummer eines für die Basisstation (10) erzeugten Hyperrahmens erfaßt wird,
d) bei jeder Nummer des erfaßten Rahmens die gespeicherte Taktinformation aktualisiert wird, wobei eine Differenz zwischen zwei Nummern von Rahmen in eine temporäre Information übertragen wird, die eine Aktualisierung ermöglicht,
und daß bei Wechsel der Basisstation:
e) die Versorgung des Taktgebers (8) aktiviert wird,
f) eine Taktinformation abgespeichert wird, wenn das Mobiltelephon (1) mit einer neuen Basisstation verbunden ist,
g) eine Versorgung des Taktgebers (8) unterbrochen wird,
h) die Schritte e) bis g) bei jedem Wechsel der Basisstation wiederholt werden.

2. Mobiltelephon (1) für das Umsetzen des Verfahrens nach Anspruch 1, das einen Taktgeber (8) umfaßt, **dadurch gekennzeichnet, daß** es einen nichtflüchtigen Speicher (14) zum Sichern einer Nummer eines Rahmens (112) eines Hyperrahmens (12) von einer Basisstation (10) eines Mobiltelephonnetzes, mit der es verbunden ist, umfaßt.

3. Telephon (1) nach Anspruch 2, **dadurch gekennzeichnet, daß** der nichtflüchtige Speicher (14) ein EEPROM ist.

4. Telephon (1) nach Anspruch 2 oder 3, **dadurch gekennzeichnet, daß** es eine Vorrichtung (15) zum Erfassen einer Versorgungsunterbrechung umfaßt.

## Claims

1. Method for saving the time in a mobile telephone (1) comprising a clock (8) and a non-volatile memory (14) for storing clock information for the mobile telephone,
**characterised in that** during connection with a base station (10)
a) clock information is stored, after manual adjustment of the clock (8), in the memory (14),
b) the power supply to the clock (8) is cut,
c) the number of a frame of a hyperframe produced by the base station (10) is measured regularly,
d) the stored clock information is updated for each measured frame number, a difference between two frame numbers being converted into time information permitting the updating,
and **in that** when a base station change is made
e) the power supply to the clock (8) is activated,
f) clock information is stored when the mobile telephone (1) is connected to a new base station,
g) the power supply to the clock (8) is cut,
h) steps e) to g) are restarted for each change of base station.

2. Mobile telephone (1) for implementing the method according to claim 1, comprising a clock (8),
**characterised in that** it comprises a non-volatile memory (14) for saving the number of a frame (112) of a hyperframe (12) emanating from a base station (10) of a mobile telephone network with which the mobile telephone (1) is connected.

3. Telephone (1) according to claim 2, **characterised in that** the non-volatile memory (14) is of EEPROM type.

4. Telephone (1) according to claim 2 or claim 3, **characterised in that** it comprises a device (15) for detecting a cut in power supply.
